(19) Europäisches Patentamt
European Patent Office
Office européen des brevets

(11) **EP 3 032 479 A1**

(12) **EUROPEAN PATENT APPLICATION**

(43) Date of publication:
**15.06.2016 Bulletin 2016/24**

(51) Int Cl.:
**G06Q 30/00** *(2012.01)*    **G06F 17/30** *(2006.01)*

(21) Application number: **15199205.4**

(22) Date of filing: **10.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **12.12.2014 US 201414568990**

(71) Applicant: **Genesis Media LLC**
**New York, NY 10010 (US)**

(72) Inventors:
• **BHAT, Faizan**
**New York, NY New York 10003 (US)**

• **DATTA, Souptik**
**Cedar Grove, NJ New Jersey 7009 (US)**
• **DINGEMANS, Toby**
**New York, NY New York 10024 (US)**
• **FEUER, Josh**
**New York, NY New York 10012 (US)**
• **LEONOV, Ivan**
**New York, NY New York 10001 (US)**

(74) Representative: **Suèr, Steven Johannes et al**
**Graham Watt & Co LLP**
**St. Botolph's House**
**7-9 St. Botolph's Road**
**Sevenoaks TN13 3AJ (GB)**

(54) **DIGITAL CONTENT DELIVERY BASED ON MEASURES OF CONTENT APPEAL AND USER MOTIVATION**

(57)    The invention provides, in some aspects, a digital data system for automated customization of digital content delivered over a network based, e.g., on measures of content appeal and/or user motivation. That content can include web pages, downloads, or other digital content accessed by a client digital data device (e.g., on behalf of a user) from a server digital device. Such a digital data system can comprise a server digital data device that is coupled to a plurality of client digital data devices over a network such as, for example, the Internet. A server application executing on the server digital data device responds to requests received from the client digital data devices for delivering thereto requested digital content. The server application customizes at least a selected piece of digital content it delivers to a respective client application (in response to such a request) based on a quantitative rank of that piece, where that quantitative rank is a measure of aggregate user motivation and/or willingness to engage with that piece of content as determined from measurements made against prior accesses to and/or attempts to access that piece of content or pieces of content like it by one or more users.

Figure 1

**Description**

**Background of the Invention**

The invention relates to digital content delivery and more particularly, by way of non-limiting example, to the delivery of content over networks based on measures of content appeal and user motivation. The invention has application, by way of non-limiting example, to the delivery of content over the Internet.

With one-half billion active web sites and tens of trillions of web pages, the Internet represents a wealth of information of truly epic proportions. And, although the Internet continues to grow, the individual web sites and web pages that make it up are largely static. Not only do most of those sites and pages remain unchanged over time, they typically present the same information to all users who visit them.

Apart from news, search and other portals designed around dynamic content, there are few methods to counter the fact that most sites/pages remain unchanged over time, shy of owners making frequent updates to their web sites. As to the fact that most sites deliver the same information to all visitors, efforts have been made to automate the delivery of user-customized content. However, these are typically based on limited and, usually, outdated user profile information that are logged in browser "cookies," server-side registries and the like. Those approaches, as a practical matter, often result in customizations that add little of value to the user experience.

A related approach, common on retailing web sites, is to customize individual visitors' experiences by presenting content that has proven of interest to other visitors of like customer profiles. The customizations are typically coarse and the methodologies of limited applicability outside the realm of web retailing.

What are needed are improved methods and systems of digital content delivery and, particularly, for example, improved methods and systems for the customization of content delivery. These, accordingly, are objects of the invention.

Related objects are to provide such methods and systems as are applicable to the customization and delivery of content over networks such as, by way of non-limiting example, the Internet.

Still further objects of the invention are to provide such methods and systems as improve the delivery of content, whether by customizing sequences of web pages presented for traversal and/or traversed by users, by customizing content on those pages, customizing downloads from those pages, or otherwise.

Yet still further objects of the invention are to provide such methods and system as permit customization based on characteristics of the digital content to be delivered, optionally, in view of the profile of the user to whom it is to be delivered.

These and other objects of the invention are evident in the drawings and in the discussion that follows.

The foregoing are among the objects attained by the invention, which provides, in some aspects, a digital data system for automated customization of digital content delivered over a network based, e.g., on measures of content appeal and/or user motivation. That content can include web pages, downloads, or other digital content accessed by a client digital data device from a server digital device.

Such a digital data system can comprise a server digital data device that is coupled to a plurality of client digital data devices over a network such as, for example, the Internet. A server application executing on the server digital data device responds to requests received from the client digital data devices for delivering thereto requested digital content. Client applications executing on the client digital data devices generate such requests at the behest of users operating those respective client digital data devices.

The server application customizes at least a selected piece of digital content it delivers to a respective client application (in response to such a request) based on a quantitative rank of that piece, where that quantitative rank is a measure of aggregate user motivation and/or willingness to engage with that piece of content as determined from measurements made against prior accesses to and/or attempts to access that piece of content or pieces of content like it by one or more users.

Related aspects of the invention provide a digital data system, e.g., as described above in which the client applications are web browsers, the server application is a web server, and the digital content comprises web pages.

Other aspects of the invention provide a digital data system, e.g., as described above, in which the server application customizes pieces of digital content (e.g., web pages) by supplementing them with content, before delivery, with advertisements, calls to action, appeals or other content. In related aspects of the invention the server customizes such pieces with higher quantitative rank values by supplementing them with content whose value is maximized by additional user exposure.

Yet still other aspects of the invention provide a digital data system, e.g., as described above, in which in connection with delivery of a customized digital content piece (e.g., a customized web page) to a client digital data device for presentation thereon the server application logs any of an identity of that digital content piece, a quantitative rank value of that web page, and an identity of any digital content (e.g., advertisements, etc.) added to the digital content piece as part of the customization.

In related aspects of the invention, that logged information is utilized in connection with debiting/crediting accounts of any of publishers, authors, artists, creators, advertisers, and other stakeholders whose content appears on the customized digital content piece.

Whereas in some aspects of the invention, the server application customizes pieces of digital content by supplementing them as described above, still yet other aspects of the invention provide a digital data system, e.g., as described above in which the server application customizes pieces of digital data content (e.g., web pages) by varying hypertext or other links as a function of the respective quantitative rank values of those pieces.

Further aspects of the invention provide a digital data system, e.g., as described above, in which the server application determines the rank of a web page or other previously delivered piece of digital content (e.g., a download, a music or video file, and so forth) based on user response to impediments and/or previews delivered to one or more of the client devices along with that same piece of previously-delivered digital content.

Related aspects of the invention provide such a digital data system in which that rank is additionally determined based on such user response to the previously delivered piece of digital content (e.g., web page) itself.

Still yet further aspects of the invention provide a digital data system, e.g., as described above, in which the server application defines a preview of a requested piece of digital content (e.g., a web page) to include a portion of that piece of digital content or representation thereof, including any of a title/headline, summary, excerpt, image-of-interest, keyword, and thumbnail image,

In related aspects of the invention, a digital data system, e.g., as described above, varies a form and/or content of previews delivered with pieces of content to the one or more client devices in respect to requests for a given piece of digital content.

Yet still other aspects of the invention provide a digital data system, e.g., as described above, in which the server application defines an impediment that is to be delivered to a client device along with a preview to comprise any of a survey, a video, advertisement or other content to which the user of a client device to which that impediment is delivered must view or otherwise interact for at least a set period of time or in some other specified way (e.g., watching a video for a specified period, answering at least 90% of the questions in a survey, "mousing over" an item in an advertisement, paying a sum certain, paying a user-chosen amount or incurring some other economic detriment, or otherwise, all by way of non-limiting example).

In related aspects of the invention, a digital data system, e.g., as described above, varies a type and time period of impediments delivered with previews to the one or more client devices.

Further aspects of the invention provide a digital data system, e.g., as described above, in which the server application monitors a response of a user to any of a delivered preview and impediment.

In still yet further related aspects of the invention, the server application delivers a requested piece of digital content to a client device if the user thereof overcomes an impediment previously delivered to that device in connection with a preview of that piece of digital content. In related aspects of the invention, the server application monitors interaction of the user to that delivered piece of digital content.

Other aspects of the invention provide a digital data system, e.g., as described above, in which the server application determines a quantitative rank value of a piece of digital content delivered to a client digital data device as a function of responses of the user of the device to an impediment and/or preview delivered (prior to and) in connection with that piece of digital content and, additionally, as a function of the user interaction with the piece of digital content itself.

Still other aspects of the invention provide methods of operating a digital data system or a component thereof (e.g., a server digital data processor) in accord with the operations described above.

Yet still other aspects of the invention provide a server digital data device as described above.

These and other aspects of the invention are evident in the drawings and in the discussion that follows.

## Brief Description of the Illustrated Embodiment

A more complete understanding of the invention may be attained by reference to the drawings, in which:

Figure 1 depicts a digital data processing system according to one practice of the invention for automated customization of content delivered over a network, e.g., the Internet.

Figure 2 depicts a time-wise sequence of requests and transfers between a server digital data device and client digital data devices in the system of Figure 1.

Figure 3 is a flow chart illustrating a methodology executed by a server application in responding to requests for a web page received from client devices in a system of Figure 1.

**Detailed Description of the Illustrated Embodiment**

*Overview*

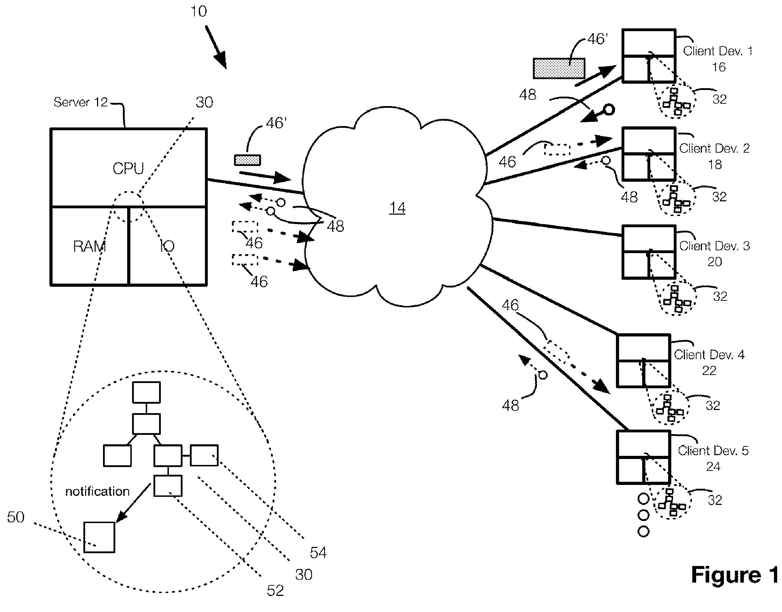

Figure 1 depicts a digital data processing system 10 according to one practice of the invention for automated customization of content delivered over a network, e.g., the Internet. That content can constitute web pages or portions thereof, downloads or portions thereof, or other digital content accessed by a client digital data device from a server digital data device, and its delivery (as that term is used here) refers to transfer and/or presentation of such content.

Thus, by way of example, according to some practices of the invention, illustrated system 10 can be used for the customization of web pages accessed on a server by a browser executing on a client device. Customization can be based, for example, on page-wise measures of content appeal and/or user motivation-that is measures of content appeal and/or user motivation as measured with respect to prior access to the requested page by other users and/or, potentially, by the same user.

Turning to the Figure 1, illustrated system 10 includes a server digital data device 12 that is coupled via network 14 for communications with client digital data devices 16-24. Devices 12 and 16-24 comprise conventional desktop computers, workstations, minicomputers, laptop computers, tablet computers, PDAs or other digital data devices of the type that are commercially available in the marketplace, all as adapted in accord with the teachings hereof. Thus, each comprises central processing (CPU), memory (RAM), and input/output (IO) subsections of the type conventional in the art. The devices 12, 16-24 may be of the same type, though, more typically, they constitute a mix of devices of differing types.

Devices 12 and 16-24-and, more particularly, for example, their respective central processing (CPU), memory (RAM), and input/output (IO) subsections-are configured to execute software applications (depicted, here, by flowchart icons) of the conventional type known in the art, as adapted in accord with the teachings hereof.

Examples of such applications include application 30 executing on device 12 and comprising a web server that responds to requests in HTTP or other protocols for transferring web pages, downloads and other digital content to the requestor over network 14-all in the conventional manner as adapted in accord with the teachings hereof. That digital content may be generated wholly from within application 30, though, more typically, it includes content sourced from elsewhere, e.g., database(s), file systems, or otherwise (not shown). Though referred to here as a web server, in other embodiments application 30 may comprise other functionality suitable for responding to client requests for transferring digital content to the requestor over the network 14, e.g., a video server, a music server, or otherwise. And, though discussed here as applications software, in other embodiments application 30 may comprise middleware, operating system or other software, firmware, hardware or other functionality.

A further example of the application which the aforesaid devices are configured to execute are applications 32 executing on devices 16-24 and comprising web browsers that typically operate under user control to generate requests in HTTP or other protocols for web pages, downloads and other digital content, that transmit to those requests to server application 30 over network 14, and that present content received from the server application 30 to the user-all in the conventional manner in the adapted in accord with the teachings hereof. Though referred to here as web browsers, in other embodiments applications 32 may comprise other functionality suitable for transmitting requests to server application 30 and/or presenting content received therefrom in response to those requests, e.g., a video player application, a music player application or otherwise. And, though discussed here as applications software, in other embodiments applications 32 may comprise middleware, operating system or other software, firmware, hardware or other functionality. Illustrated applications 32 may be of the same type as one another, although, in many embodiments, they are of varied types, e.g., a mix of web browsers, music players, video players, etc. And, although in some embodiments the applications 32 may operate in partial cooperation with one another, in the illustrated embodiment they need not.

Although only a single server digital data device 12 is depicted and described here, it will be appreciated that other embodiments may utilize a greater number of these devices, homogeneous, heterogeneous or otherwise, networked or otherwise, to perform the functions ascribed hereto to application 30 and/or digital data processor 12. Likewise, although several client digital data devices 16-24 are shown, it will be appreciated that other embodiments may utilize a greater or lesser number of these devices, homogeneous, heterogeneous or otherwise, running applications 32 that are, themselves, as noted above, homogeneous, heterogeneous or otherwise.

Network 14 comprises one or more networks suitable for supporting communications between server 12 and data devices 16-24. The network comprises one or more arrangements of the type known in the art, e.g., local area networks (LANs), wide area networks (WANs), metropolitan area networks (MANs), and or Internet(s).

*Content Customization*

In the illustrated embodiment, application 30 (and, more generally, server 12) customizes each of at least selected web pages it delivers to an application 32 (and, more generally, its respective client device-say, device 16, by way of example) in response to a request made by that application 32 for that web page, e.g., at the behest of its respective users (i.e, the user of device 16, to continue the example). Similarly, the application 30 can, instead or in addition, customize each of at least selected other types of digital content (e.g., music and video downloads, to name a few) delivered to the requesting application 32. For sake of simplicity, web pages are the type of digital content discussed in connection with the illustrated embodiment and in the examples that follow. Those skilled in the art will, of course, appreciate that the teachings thereof apply with equal force to other types of digital content, e.g., music and video downloads to name a few.

The aforementioned customization of each web page is based on a quantitative rank, referred to here without loss of generality as the "content appeal rank" (or CAR) of that page. In the illustrated embodiment, the CAR is a measure of *aggregate* (e.g., network-wide) user motivation and willingness to download, view or otherwise engage with that page, which measure is used by application 30 to estimate the motivation and willingness of a *given* user to engage with that page (e.g., in the example, the user of a device 16 whose respective application 32 is currently requesting that page). Put another way, it serves as an estimate of how much attention a user is likely to pay to a web page that she requested and/or how motivated she is to access that page. In some embodiments, it can be, more particularly, an estimate of how motivated she is to access the page based on a preview (e.g., a display of portions of the page). That aggregate user motivation which forms the basis for the value of CAR of a given page is based on measurements made against prior accesses to (or attempts to access) that page (or pages like it) by the same, or more typically, users of other client devices (e.g., devices 18-24 in this example) of the system 10. CAR is normalized metric and can be expressed as percentage or ordered rank. And, while in some embodiments, the CAR value is a measure of *aggregate* (e.g., network-wide) user motivation and willingness to download, view or otherwise engage with that page, in other embodiments, it may be a measure that is limited to segments of the user population (e.g., users of a given gender or other demographic, users accessing the page at a specific time of day, users accessing the given page from a given site or otherwise). More generally, it can also be a function of the nature or type of impediment and/or of a context in connection with which the user accesses the page or other piece of digital content.

A still further appreciation of the CAR value as employed in some embodiments may be had by reference to the following note:

==================

*WHAT IS CONTENT APPEAL RANK?*

*A measure of how much attention a user is likely to pay to a webpage and how motivated they are to access the page based on preview*

- *Relative to the user, but the measure is an aggregate measure based on all current or potential traffic on that page*
- *A combined measure of user motivation and willingness to engage with a webpage*
- *Higher the value, more valuable is the page both from advertiser and publisher perspective*
- *Application 30 is in a unique position to measure by stress-testing the access and monitoring the post-access in-page activity*

*CONTENT APPEAL RANK INDICATORS (FACTORS)*

*Motivation indicators*

- *When interrupted with an impediment, what fraction of visitors try to overcome it to access the page compared to the fraction that gives up by abandoning the page*

(continued)

| | |
|---|---|
| • | *An alternative way to measure motivation is to measure how much money users willing to pay on average when digital contents are served in pay per consumption model, free of any impediment.* |

*Activity indicators*

| | |
|---|---|
| • | *Traffic volume: How does it compare to the average volume?* |
| • | *Average time spent: More time = more appeal* |
| • | *User Activities: More activities = more appeal (ex: scroll, likes, shares, comments, etc.)* |

*Similarity indicators*

| | |
|---|---|
| • | *Similarity with other high attention content* |

====================

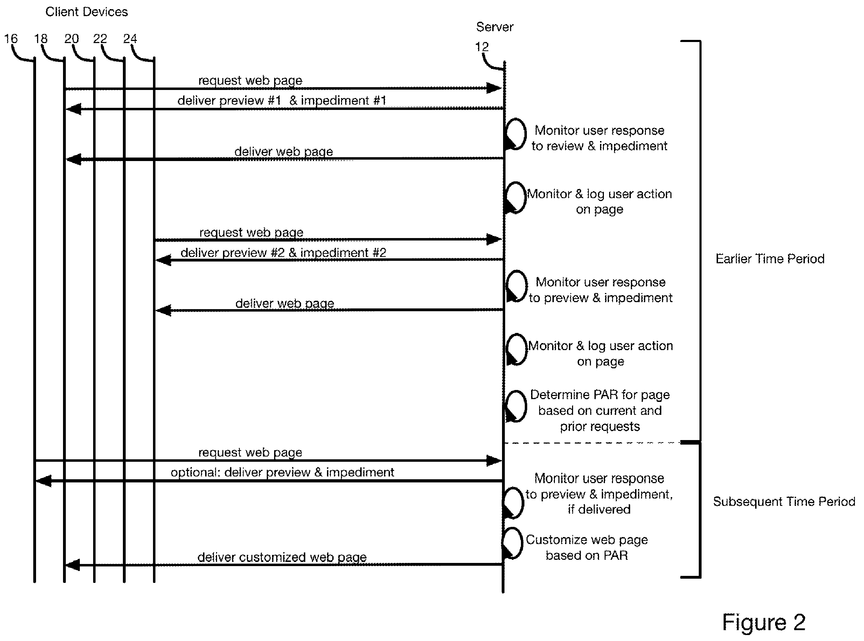

The foregoing is reflected in Figure 1 by rectangles 46 representing a web page delivered to multiple client devices by server 12 in response to requests, represented by arrows 48, for that page generated by users of those respective client devices via browsers 32 executing thereon. It is also reflected in Figure 2, which depicts a time-wise sequence of requests and transfers between those respective devices.

As reflected by the use of dashed lines with some of those elements in Figure 1, prior in time application 30 executing on server 30 transferred to client devices 18, 24 the web page 46 in response to requests 48 generated by applications 32 executing on those client devices. *See also,* the sequence of requests and responses between devices 12, 18 and 24 reflected in connection with the period labelled "Earlier Time Period" in Figure 2.

As discussed further below, it is in connection with delivery of that web page 46 to those devices 18, 24 that application 30 determines a CAR value for that page 48, e.g., based on the responses of those users to "impediments" and/or previews delivered with those pages and/or on those users actions once granted access to the pages. *See also,* the final action depicted for device 12 in connection with the period labelled "Earlier Time Period" in Figure 2.

An appreciation of this use of impediments and previews to generate CAR values in some embodiments of the invention may be had by reference to the analogy in the following note:

====================

*INSPIRATION FROM 2ND LAW OF THERMODYNAMICS*

| | |
|---|---|
| • | *Maxwell's Demon : An imaginary gatekeeper who can separate out cold molecules from hot ones by opening and closing a gate in between two closed systems* |
| • | *Application 30 is in a position to pose as the demon.* |

| | |
|---|---|
| • | *Using the advertisement, survey or other impediment as a gateway to content, application 30 can separate out more attentive users from less attentive users in real time* |

====================

Conversely, as reflected by the use of solid lines with others of elements 46, 48, once that CAR value is determined for the page 48, the application 30 delivers a customized version of the page-here, designated 48' and shaded for emphasis-to device 16 in response to a subsequent request for page 48 by the user of that device. *See also,* the sequence of requests and responses between devices 12 and 16 in connection with the period labelled "Subsequent Time Period" in Figure 2.

In some embodiments, the application 30 delivers customized versions of a requested page, e.g., web page 48, based not on a CAR value determined from prior accesses to (or attempts to access) that page but, rather, based on prior accesses to (or attempts to access) other pages-or, more simply put, the CAR value of other (typically, similar) pages can be used as a CAR value for a requested page. An appreciation of this as applied in some embodiments of the invention may be attained from the following note:

=====================

*MEASURING PAGE SIMILARITY*

- *The application 30 is in a position to assign a quality score to a page by finding the most similar pages in its universe and*
- *interpreting the amount of attention it can generate Similar to finding k-nearest neighbor approach*

- *Particularly useful for pages that are yet to be published or pages that does not have enough activity data available*

=====================

**Use Cases**

As those skilled in the art will appreciate, the higher the CAR value of a given web page (or other piece of digital content), the more engaging (e.g., interesting) that page is likely to be to that user; the lower that value, the less engaging it is likely to be. The application 30 can capitalize on that in a number of ways.

For example, since a higher CAR value suggests that the page is more engaging to the user, it also suggests that the web page is (or should be) more valuable to the publisher and other stakeholders (e.g., authors, artists, creators, advertisers, etc., whose content appears on the page). Accordingly, in some embodiments, the application 30 notifies accounting logic 50 (executing on device 12 and integral with application 30, or otherwise) of the identity of each delivered web page along with its CAR value (if the page has one) for use by that logic 50 in debiting or crediting respective stakeholders' accounts. For example, when the application 30 delivers a web page having a CAR value of 10 to application 32 executing on device 16 in response to a request by a user of that device, the application 30 can duly notify accounting logic 50, which debits by $10 the account of each advertisers whose ad content appears on that page and credits $5 to the web page publisher and $5 to the pool of authors/artists whose content appears on that page. Conversely, to continue the example, when the application delivers a web page of CAR value 20 to the application 32, it can duly notify accounting logic 50, which doubles both the amounts debited and credited to those respective parties.

Other embodiments capitalize on the CAR value in other ways, instead or in addition to the foregoing. Since CAR value can serve as an estimate of how engaging a page is to users, the application 30 can customize web pages that have high CAR values by supplementing them with content before delivery to the requestor with advertisements, calls to action, appeals or other content whose value is maximized by additional user exposure. Conversely, the application 30 can decide not to customize pages with low CAR values or customize them with supplements that require less attention for impact.

Continuing the above examples, when the application 30 delivers a web page having a CAR value of 20 to application 32 executing on device 16 in response to a request by a user of that device, the application 30 utilizes customization logic 52 (executing on device 12 and integral with application 30, or otherwise) to customize that page before delivery by inserting a somber appeal for donations to a relief fund or material more likely to be ignored by that user unless she spends a considerable time perusing the other content of the requested page. In some embodiments, upon delivery of the customized page, the application notifies the accounting logic 50 of the page identity, the CAR value and the identity of any digital content (e.g., advertisements, etc.) provided on account of the customization.

Conversely, to continue the example, when the application 30 delivers a web page having a CAR value of 10 to application 32 executing on device 16 in response to a request by a user of that device, the application 30 utilizes logic 52 to customize that page by inserting an eye-catching ad that is likely to draw attention from that user even if she only briefly peruses the page's other content. Again, upon delivery of the customized page, the application 30 can notify the accounting logic 50 of the page identity, the CAR value and the identity of any digital content (e.g., advertisements, etc.) provided on account of the customization. Logic 52 can generate the customized web page by manipulation of the HTML, Flash, embedded links or other codes defining that page in order to insert, remove, reposition or otherwise modify the page to effect the desired customization.

In some embodiments, such customization of content can include varying hypertext or other links on requested web pages depending on their respective CAR values. In this way, customization can alter a sequencing of web pages delivered by the server application 30 to the client applications 32. For example, when the application 30 delivers a web page having a high CAR value to application 32 executing on device 16 in response to a request by a user of that device, the application 30 utilizes logic 52 to customize that page by inserting links to still other web pages of high CAR value, which pages can, themselves, include links to yet still other web pages of high CAR value (and so forth and so on), terminating in web pages that request donations, subscriptions or otherwise contain content of interest to highly engaged users.

A further appreciation of the use of CAR values in web page customization may be appreciated from the following note:

=====================

*AD DECISIONING*

*By utilizing CAR scores in connection with ad placement on customized pages, the application 30 allows for effecting the following in real-time*

- *Optimum ad-targeting*
  - *which pages to target for video advertisement for better view completion rate*
  - *which pages to not place ads on to reduce abandonment*

- *Optimum ad length prediction*
  - *optimum length of advertisement to run on the page*
- *Optimum ad-type prediction*
  - *whether page performs better with click-to-play or autoplay ad or possibly non-video ad (ie: display, rich media or other).*

*FUTURE AD PLACEMENTS*

- *Content classification*
  - *separating high attention content from low attention content in the web for future advertisement placement*
- *Trend prediction*
  - *predict whether attention is about to grow, fall or stay steady in near future and move advertisement inventory accordingly*
- *Lifespan projection*
  - *predict how long a page is expected to bring in attention*

=====================

**CAR Determination**

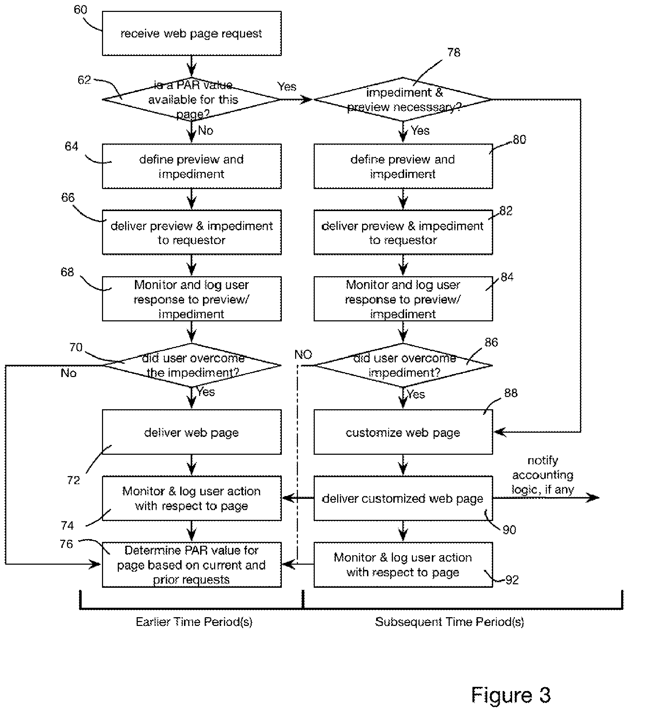

Figure 3 is a flow chart illustrating a methodology executed by application 30 in responding to requests for web page 48 received from client devices 16-24 and, more particularly, their substituent web browsers 32 in a system 10 according to some practices of the invention. The application can operate similarly in response to receipt of requests for other web pages, as well as other types of digital content.

In step 60, the application 30 receives a request for the web page 48 from one of the client devices, e.g., 18. This can be in the form of an HTTP request that specifies the page by URL or otherwise. For this and other types of digital content the request may utilize another protocol, proprietary or otherwise.

In step 62, the application 30 determines if the requested page 48 has a CAR value or if one is otherwise available for it from a similar page, e.g., a page of similar type as determined from a k-nearest neighbor approach. If so, it prepares to respond to the request with a customized version of the requested page, beginning at step 78. If not, it begins determination of such a value in connection with responding to the request, beginning at step 64.

An appreciation of the aforementioned k-nearest neighbor approach as used in some embodiments may be attained by reference to the following note:

====================

*FINDING SIMILAR PAGES*

*A digital content can be represented in the form of a feature vector, and similarity between two contents can be measured by computing distance between the two vectors in the feature space (e.g. using Euclidean distance or cosine similarity). A k-Nearest Neighbors regression algorithm finds the closest k neighbors by calculating distance between the vector representing the content and the pool of vectors representing other digital contents with known CAR values and sorting the other contents by distance. The algorithm then calculates the CAR value of a the content as a weighted average CAR value of its k nearest neighbors. Digital contents like text-heavy web pages can result in a very high*

*dimensional representative vector if all the words and metadata (e.g. author, publish date, topic, number of in links and outlinks) are used as features. Standard dimensional reduction algorithms like principal component analysis (PCA) and text processing algorithms like latent Dirichlet allocation (LDA) for identifying central topic helps reducing the dimension of representative feature vector.*

==================

In step 64, the application 30 defines a preview of the requested web page to be delivered to the requesting client device, e.g., device 18. The preview, which typically includes a portion of the content of the requested page (e.g., a title, summary, excerpts, image-of-interest, etc.) may be intended to allow the user of that device to inspect or view the requested page via the application 32 on that device before the page is made more fully available. In some embodiments, the application utilizes a same methodology for generating previews for each type of digital content (e.g., in the case of web pages, headline of requested page 48, snippet containing catchy keywords from requested page 48 and thumbnail photo of requested page 48). In other embodiments, the application 30 varies the form and/or content of the preview in response to each or some requests for a given page. Thus, for example, the application 30 might generate a first form and content selection for the preview the first time web page 48 is requested, a second form and/or content selection, the second time it is requested, and so on, cycling through various forms and/or content selections for preview every few requests for the given page-all by way of example.

In step 64, the application 30 defines an impediment to be delivered with the preview. The impediment, which typically comprises a survey, a video and/or an advertisement which the user of the requesting client device, e.g., 18, must view for at least a set period of time (and/or in some specified way-e.g., watching a video-type impediment for a specified period, answering at least 90% of the questions in a survey-type impediment, "mousing over" an item in an advertisement-type impediment, paying a sum certain, paying a user-chosen amount or incurring some other economic detriment in order to bypass/overcome the impediment, or otherwise, all by way of non-limiting example) and/or respond to (e.g., via application 32 on that device) in order to trigger delivery of the requested page 48. In some embodiments, the application 30 delivers a same impediment with each preview (e.g., an advertisement or video that the user must watch on the requesting device for, say, at least 15 seconds, before delivery of the requested page 48). In other embodiments, the application 30 varies the type of impediment delivered with each or some previews of a given page. Thus, for example, the application 30 might generate a first type of impediment (e.g., an ad requiring at least 15 seconds of viewing) to accompany a preview the first time web page 48 is requested, a second type of impediment (e.g., an ad requiring at least 25 seconds of viewing, the second time it is requested, and so on), cycling through various forms and/or content selections for preview every few requests for the given page-all by way of example.

In step 66, the application 30 delivers the preview and impediment to the requesting client device (e.g., device 18) for viewing by the user of that device via its browser 32 or otherwise. Delivery can be via an HTML page transferred as a response to the client device's prior HTTP request, or otherwise, depending on the protocol in use and type of digital content being delivered.

An appreciation of the relevance of the impediments and previews to CAR value in some embodiments of the invention may be had by reference to the following note:

=============================

(continued)

*WHAT CONTENT APPEAL RANK DEPENDS ON*

*1. Quality of the content of requested web page :*

    *a.     Amount of unique/novel informative*
    *b.     Timeliness of the content*
    *c.     Reputation and credibility of source : NYT vs local news agency*
    *d.     Topic : different topics create different level of motivation amongst users, but some topics have broader appeal*

*2.    Preview of the content:*
    *a.     Headline: How informative is the header or link user clicks on*
    *b.     Snippet: The preview contains how many catchy keywords*
    *c.     Thumbnail photos: The preview contains images that draws attention*

*3.    Type and size of impediments*
    *a.     Minimum length of the video impediment to be seen before access granted*
    *b.     Click-to-play vs autoplay video advertisement*
    *c.     Survey vs advertisement*

*EFFECT OF TYPE OF IMPEDIMENT*

- *Probability of unlock depends upon type and size of impediment*
    - *Autoplay vs click-to-play video/advertisement*
    - *Content of the impeding video: e.g. video related to automotive vs. video related to fitness*
    - *Minimum mandatory engagement time*
    - *when an advertisement can be skipped*

- *Same webpage gets locked by video of different length with different skip enabled time*
- *Minimum time to unlock(t_u) = Min {length of the video, time after which skip is enabled}*
- *Assuming independence, the probability of unlock P(Unlock) can be expressed as follows:*

$$P(Unlock) = \sum_{t:\{All\ video\ lengths\}} P(Unlock|t_u = t).P(t_u = t)$$

========================

In step 68, the application 30 monitors and logs the response of the user of the requesting device (e.g., device 18) to the delivered preview and impediment. Such monitoring can include determining whether the user viewed/responded to the impediment at all; if so, in what period of time or other specified manner (answering at least a designated percentage of questions in a survey-type impediment, "mousing over" at least a specified item in an advertisement-type impediment, paying a sum certain, paying a user-specified amount or incurring some other economic detriment in order to bypass/overcome the impediment, or otherwise, all by way of non-limiting example); if a substantive response was demanded by the impediment (e.g., as in the case of a survey), whether any was provided; and so forth. Although such monitoring can be via proxy code executing in the application 32 on that client device, in practice, it may be more easily effected via monitoring HTTP requests emanating from that device in response to links and other HTTP-request generating widgets and/or scripts contained, e.g., in the delivered preview and/or impediment.

Thus, for example, in step 66 the application 30 can deliver to the requesting client device, as an impediment, an HTML page that includes an embedded video advertisement and a Javascript-driven link entitled "skip this ad after 15 seconds" that generates differing types of HTTP requests depending on whether the user clicked-on the link before or after the specified period. In step 68, the application checks the type and timing of receipt of that HTTP request before delivering the requested page 48, if at all. As another example, in step 66 the application 30 can deliver to the requesting client device, as an impediment, an HTML page that includes a survey question in a text box that generates an HTTP request upon completion. In step 68, the application checks the returned text, if any, before delivering the requested page 48, if at all. It will be appreciated that these are examples only and that other varieties and types of monitoring user response to the preview and impediment are within the ken of those in the art in view of the teachings hereof.

An appreciation of the relevance of monitoring response of the user of the requesting device (e.g., 18) to the delivered preview and impediment in some embodiments of the invention may be had by reference to the following note:

====================

*MEASURING PRE-ACCESS MOTIVATION*

- *The application 30 interrupts access of a webpage by redirecting user to an ad/survey/payment prompt. Users react*
  - *by watching the ad to completion, responding to survey or paying a certain sum to access the content(unlock)*
  - *by skipping the ad after skip is enabled or declining survey (unlock). This option is not available in pay-per-consumption model.*
  - *or by quitting the page or declining to pay (abandoned)*

- *Proportional to unlock rate*
  *• Motivation $\alpha$ Probability of Unlock Probability of Unlock = # of users unlocked/ # of users locked (higher indicates more appeal)*

  *• Motivation $\alpha$ Average price paid Average price paid = Mean price paid by all the users to access the content,normalized using standard normalization technique like max-normalization.*

- *Inversely proportional to abandoned rate*
  *Motivation $\alpha$ 1 - Probability of Abandon*

  *Probability of Abandon = # of users abandoned/# of users locked (lower indicates more appeal)*

*EDITORIAL RECOMMENDATION*

- ***Editorial guideline:*** *Based on temporal variation of CAR values,the application 30 logs data providing editorial insight on what topic/keywords/type of content creates steady attention from user to access a webpage increasing the total traffic and revenue of a publisher.*

- *Preview guideline: By running A/B testing on different previews of same webpage and comparing CAR for each preview, the application 30 logs data providing insight on what type of preview generates maximum motivation amongst users to access the page*

====================

In step 70, the application determines whether the user has "overcome" the impediment, e.g., completing a questionnaire impediment or viewing an ad/video impediment for the requisite time, and so forth, as described above. If not, the application 30 can deliver to the requesting device, e.g., 18, an alternative to the requested page 48 or nothing at all, and can proceed to CAR calculation in step 76.

Conversely, if the user did overcome the impediment, the application 30 can deliver the requested web page 48. See step 72.

In step 74, the application 30 monitors and logs user action with respect to the delivered web page, including, by way of example, scrolling, links clicked, videos and other media viewed, and so forth. As above, this can be accomplished via proxy code executing in the application 32 on that client device. However, in practice, it may be more easily effected via monitoring HTTP requests emanating from that device in response to links and other HTTP-request generating widgets and/or scripts in the page 48.

An appreciation of the relevance of monitoring response of the user of the requesting device (e.g., 18) to the delivered web page 48 in some embodiments of the invention may be had by reference to the following note:

====================

*MEASURING POST-ACCESS ENGAGEMENT*

*The application 30 code monitors user engagement after user is granted access to the requested web page 48 by*

- *measuring scroll activity*
- *measuring time spent on the webpage*
- *tracking mouse movement and clicks on the page (future possibility)*

*A single score is calculated that measures page-engagement after user access the webpage based on above user activities*

====================

In step 76, the application 30 invokes logic 54 (executing on device 12 and integral with application 30, or otherwise) to determine a CAR value of the delivered web page 48 based on the responses of the user of the client device, e.g., 18, to which the impediment, preview and (possibly) the requested page 48 had been delivered. To this end, logic 54 generates a value of CAR the page in accord with the following relation:

$$CAR = w_{pre\text{-}access} \ x \ Motivation \ Score + \ (1 - w_{pre\text{-}access}) \ x \ Engagement \ Score$$

where,

- $w_{pre\text{-}access}$ is defined as the weight associated with motivation score of the content.
- **Motivation Score** is defined as a weighted combination of probability of willingness to overcome an impediment and complement of probability of abandoning the access of the digital content in presence of an impediment prior to access of the content. The willingness can also be measured by average amount of money users are willing to pay upfront to access a piece of digital content in a pay-per-consumption or subscription model without any impediment. In this model, users are offered to pay upfront to access a content for a fixed period of time without any impediment. Contents accessed by subscription model are assigned average price per content paid by all the users. Motivation score is computed by normalizing the average price paid for a content by all the users and multiplying that with a scaling factor.
- **Engagement Score** is defined as a weighted combination of engagement activities with the digital content (e.g. scrolling, leaving comments, sharing etc) and average engaged time spent with the content.

A fuller appreciation of the manner in which the CAR value may be determined in some embodiments of the invention may be had by reference to the following note:

====================

HOW IS CAR MEASURED?

- CAR is a single metric that combines user motivation, activity and quality factor into one number for a specific webpage
  - ensemble metric, weighted average

(continued)

- • weights could be adjusted for different application (prediction vs historic)
- • weights could be machine learned for optimal value
- • Measuring pre-access user motivation

  - • Fraction of user who gained access by crossing impediment, fraction of people who abandoned

  - • Average amount of money users are willing to pay to access

  - • Above measures broken down by length and type of of impediment
- • Measuring post-access user activity

  - • Time spent, scroll, comments, shares etc on the page

- • Measuring page quality ( for pages without user activity data)

  - • Length of text, source, topic, similarity to other high quality pages that drew high attention from users

====================

As noted above, if in step 62 the application 30 determines that a CAR value is available for the requested page 48, processing proceeds to step 78. There, the application 30 determines if a preview and impediment will be delivered to the requesting client device prior to delivery of the requested page itself. This is a implementation-specific decision and, depends, for example, on whether the application 30 will define (or further define) the CAR value for the requested page by monitoring the user's response to that preview and impediment and/or whether that response will serve to winnow out requestors whose motivation to review the requested page is too low-all by way of example. If a preview and impediment are not to be delivered, processing proceeds to step 88; otherwise, it proceeds to steps 80-86, which parallel steps 64-70 discussed earlier, and on to step 88 if the user overcomes the impediment.

In step 88, the application 30 customizes the web page 48, e.g., in the manner discussed in the section entitled "Content Customization" above.

In step 90, the application 30 delivers the customized page the the client device that issued the request and, in embodiments that utilize it, notifies accounting logic 50 of the page identity, the CAR value and the identity of any digital content (e.g., advertisements, etc.) provided on account of the customization.

In step 92, the application 30 monitors and logs user action with respect to the delivered customized web page in a manner paralleling that discussed in connection with step 74, above.

*INTERFACING WITH OTHER APPLICATIONS*

In some embodiments, the application 30 exposes some or all of its oeprational functionality by way of an applications program interface (API) having callable functions in the nature of the following:

1. getTopkURL (site name, start-time, end-time, k, order) : Top/bottom k performing webpages
2. getCAR(URL, start-time, end-time) : CAR score for given page for a given time in past
3. getCARforAdlength(URL, ad length,start-time, end-time) : CAR score for given page for a given length of impediment
4. predictCAR( (URL) :Predicted CAR score for for pages not live yet
5. predictMaxvideolength(URL) : Upper limit of video length for highest appeal
6. Aggregation functionality on getTopkURL

  a. getTopkwd(site name, start-time, end-time) : Top keywords found in top performing webpages for a given site during a given time in past

b. getTopCatgory(site name, start-time, end-time): Top categories of article/topics based on top performing webpages for a given site during a given time in past

7. findLongCARpages (site name, start-time, end-time): Find webpages with steady appeal vs temporary appeal

Described above and shown in the drawings are methods and systems meeting the aforementioned and other objects. It will be appreciated that the embodiments shown here, however, are merely examples of the invention and that other embodiments incorporating changes therein may fall within the scope thereof.

**Claims**

1. A digital data system for automated customization of digital content delivered over a network, comprising

   A. a server digital data device that is coupled to and in communications coupling with a plurality of client digital data devices over the network,
   B. a server application executing on the server digital data device, the server application responding to requests received from the client digital data devices at the behest of users thereof for delivering to those respective client digital data devices requested digital content, and
   C. the server application customizes at least a selected piece of digital content that it delivers to a respective client application in response to such a request based on a quantitative rank of that piece of digital content, where that quantitative rank is a measure of aggregate user motivation and/or willingness to engage with that piece of content as determined from measurements made against prior accesses to and/or attempts to access that piece of content or pieces of content like it by one or more users.

2. A digital data system according to claim 1, in which the network comprises and Internet and the digital content comprises one or more web pages.

3. A digital data system according to claim 1, in which the server application customizes a web page or other piece of digital content by supplementing it with advertisements, calls to action, appeals or other content before delivering that web page or other piece of digital content to a requesting client digital data device.

4. A digital data system according to claim 3, in which the server application customizes a web page or other piece of digital content having a higher quantitative rank value by supplementing that page or piece with content whose value is maximized by additional user exposure.

5. A digital data system according to claim 1 in which in connection with delivery of a customized web page or other piece of digital content to a client digital data device for presentation thereon the server application logs any of an identity of that digital content piece, a quantitative rank value of that page or piece, and an identity of any content added to the page or piece as part of customization, in which case optionally the logged information is utilized in connection with debiting/crediting accounts of any of publishers, authors, artists, creators, advertisers, and other stakeholders whose content appears on the customized page or piece.

6. A digital data system according to claim 1, in which the server application customizes a web page or other piece of digital data content by varying hypertext or other links as function of a quantitative rank value of that page or piece.

7. A digital data system according to claim 1, in which the server application determines a quantitative rank value of a web page or other digital content piece previously delivered to a client digital data device based on user response to impediments and/or previews delivered therewith, in which case optionally the server application additionally determines that quantitative rank based on user response to the previously delivered web page or digital content piece.

8. A digital data system according to claim 1, in which the server application defines a preview of a requested web page or other piece of digital content to include a portion of that page or piece or a representation thereof, including any of a title/headline, summary, excerpt, image-of-interest, keyword, and thumbnail image.

9. A digital data system according to claim 8, wherein the server application varies a form and/or content of a preview delivered to the one or more client digital data devices in connection with a request for a given web page or other piece of digital content.

10. A digital data system according to claim 8, in which the server application defines an impediment that is to be delivered to a client device along with a preview of a requested web page or other digital content piece to comprise any of a survey, video, advertisement or other content which the user of a client device to which that impediment is delivered must view or otherwise interact in a specified manner; in which case optionally any of:

    a) in which the server application defines, as the manner in which the user of the client device to which the impediment is delivered must interact with that impediment, any of a period of time of interaction, a response to queries presented in the impediment, a mouse or other user action with respect to a display presented in connection with the impediment, a paying of a sum certain, a paying a user-chosen amount or incurring some other economic detriment;
    b) in which the server application varies a type and manner of interaction associated with an impediment delivered to the one or more client devices in connection with a given page or piece requested thereby;
    c) in which the server application monitors a response of a user to any of a delivered preview and impediment; or
    d) in which the server application delivers a requested web page or piece of digital content to a client device if the user thereof overcomes an impediment previously delivered to that device in connection with a preview of that page or piece, in which case further optionally the server application monitors interaction of the user to that delivered web page or other piece of digital content.

11. A digital data system according to claim 1, and any of:

    a) in which the server application determines a quantitative rank value of a web page or other piece of digital content delivered to a client digital data device as a function of responses of the user of the device to an impediment and/or preview delivered (prior to and) in connection with that page or piece and, additionally, as a function of the user interaction with the page or piece itself;
    b) in which the quantitative rank is a measure of user motivation and/or willingness aggregated across a network of users; or
    c) in which the quantitative rank is a measure of user motivation and/or willingness aggregated across a selected demographic or other segment of users of the network.

12. A digital data system according to claim 1, in which the quantitative rank is a function of the nature or type of impediment and/or of a context in connection with which the user accesses the page or other piece of digital content.

13. A method for automated customization of digital content delivered by a digital data system, comprising

    A. with a server application executing on a server digital data device, responding to requests received from client digital data devices at the behest of users thereof by delivering to those respective client digital data devices requested digital content, and
    B. with the server application, customizing at least a selected piece of digital content delivered to a respective client application based on a quantitative rank of that piece of digital content, where that quantitative rank is a measure of aggregate user motivation and/or willingness to engage with that piece of content as determined from measurements made against prior accesses to and/or attempts to access that piece of content or pieces of content like it by one or more users.

14. A method of claim 12, comprising the step of
with the server application, customizing a web page or other piece of digital content by supplementing it with advertisements, calls to action, appeals or other content before delivering that web page or other piece of digital content to a requesting client digital data device.

15. A method of claim 12, comprising the step of
with the server application, determining a quantitative rank value of a web page or other digital content piece previously delivered to a client digital data device based on user response to impediments and/or previews delivered therewith.

Figure 1

Client Devices

16  18  20  22  24

Server

12

request web page

deliver preview #1 & impediment #1

Monitor user response
to review & impediment

deliver web page

Monitor & log user action
on page

request web page

deliver preview #2 & impediment #2

Monitor user response
to preview & impediment

deliver web page

Monitor & log user action
on page

Determine PAR for page
based on current and
prior requests

Earlier Time Period

request web page

optional: deliver preview & impediment

Monitor user response
to preview & impediment,
if delivered

Subsequent Time Period

Customize web page
based on PAR

deliver customized web page

Figure 2

60 receive web page request

62 is a PAR value available for this page? —Yes→ 78 impediment & preview necesssary?

64 define preview and impediment

66 deliver preview & impediment to requestor

68 Monitor and log user response to preview/impediment

70 did user overcome the impediment?

72 deliver web page

74 Monitor & log user action with respect to page

76 Determine PAR value for page based on current and prior requests

80 define preview and impediment

82 deliver preview & impediment to requestor

84 Monitor and log user response to preview/impediment

86 did user overcome impediment?

88 customize web page

90 deliver customized web page

92 Monitor & log user action with respect to page

notify accounting logic, if any

Earlier Time Period(s)          Subsequent Time Period(s)

Figure 3

18

Europäisches
Patentamt

European
Patent Office

Office européen
des brevets

# EUROPEAN SEARCH REPORT

Application Number

EP 15 19 9205

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Vincent Toubiana: "Adnostic: Privacy Preserving Targeting Advertising", , 3 March 2010 (2010-03-03), XP055022855, Retrieved from the Internet: URL:http://www.nyu.edu/pages/projects/nissenbaum/papers/adnostic.pdf [retrieved on 2012-03-26] * section 2; page 2 - page 5 * | 1-15 | INV. G06Q30/00 G06F17/30 |
| X | Anonymous: "AdSense - Wikipedia, the free encyclopedia", , 11 November 2014 (2014-11-11), XP055269262, Retrieved from the Internet: URL:https://en.wikipedia.org/w/index.php?title=AdSense&oldid=637604412 [retrieved on 2016-04-28] * the whole document * | 1-15 | |

TECHNICAL FIELDS
SEARCHED      (IPC)

G06Q
G06F

The present search report has been drawn up for all claims

| Place of search | Date of completion of the search | Examiner |
|---|---|---|
| Munich | 29 April 2016 | Frank, Korbinian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)